# EUROPEAN PATENT APPLICATION

(11) **EP 2 782 075 A2**
(43) Date of publication of application: **24.09.2014**
(21) Application number: 14160439.7
(22) Date of filing: 18.03.2014
(51) Int. Cl.: G07C 9/00

(54) **Knock to unlock vehicle security system**

(30) Priority: 20.03.2013 US 201313847553
(71) Applicant: Delphi Technologies, Inc., Troy MI 48007 (US)
(72) Inventor: Blackmer, Stephen C., Millington, MI Michigan 48746 (US); Mayo, Eric J., Shelby Township, MI Michigan 48316 (US)
(74) Representative: Robert, Vincent

(57) **Abstract**

A vehicle security system (10) that includes a knock detection means (18, 24) such as a microphone (18) configured to detect knocking on the vehicle (12) such as knocking on a window (20) of the vehicle (12). The system (10) includes a controller (26) configured to receive a signal (22A) from the knock detection means and unlock a door (28) of the vehicle (12) if the signal (22A, 22B) corresponds to a predetermined pattern.

## Description

### TECHNICAL FIELD

This disclosure generally relates to vehicle security systems, and more particularly relates to system to unlock a door if a pattern of knocking on the vehicle corresponds to a predetermined pattern.

### BACKGROUND OF INVENTION

Despite advances in technology, people still manage to lock their keys in their cars. The advent of ONSTAR® has improved this situation, but access to a phone is required, which may also be locked in the car. What is needed is a way to unlock a car door that does not require a tool such as a key, or special equipment such as a cell phone.

### SUMMARY OF THE INVENTION

In accordance with one embodiment, a vehicle security system is provided. The system includes a knock detection means and a controller. The knock detection means is configured to detect knocking on the vehicle. The controller is configured to receive a signal from the knock detection means and unlock a door of the vehicle if the signal corresponds to a predetermined pattern. The knock detection means is a microphone. The controller is further configured to activate a light if knocking is detected. The controller is further configured to detect a door handle actuation, and monitor the signal for an activation interval if a door handle actuation is detected. The controller is further configured to activate a light if the door handle actuation is detected. The controller is further configured to be operated into a learn mode whereby the predetermined pattern is saved in the controller.

In another embodiment, the predetermined pattern includes a first number of knocks followed by a second number of knocks. The second number of knocks begins following a pause interval after the first number of knocks. The end of the pause interval is indicated by the controller activating a light.

In yet another embodiment, the predetermined pattern comprises a plurality of knocks. Each subsequent knock follows the previous knock by a distinct delay interval.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a vehicle security system in accordance with one embodiment;
Fig. 2 is graph of a knocking pattern detected by the system of Fig. 1 in accordance with one embodiment; and
Fig. 3 is graph of a knocking pattern detected by the system of Fig. 1 accordance with one embodiment.

### DESCRIPTION OF THE PREFERED EMBODIMENTS

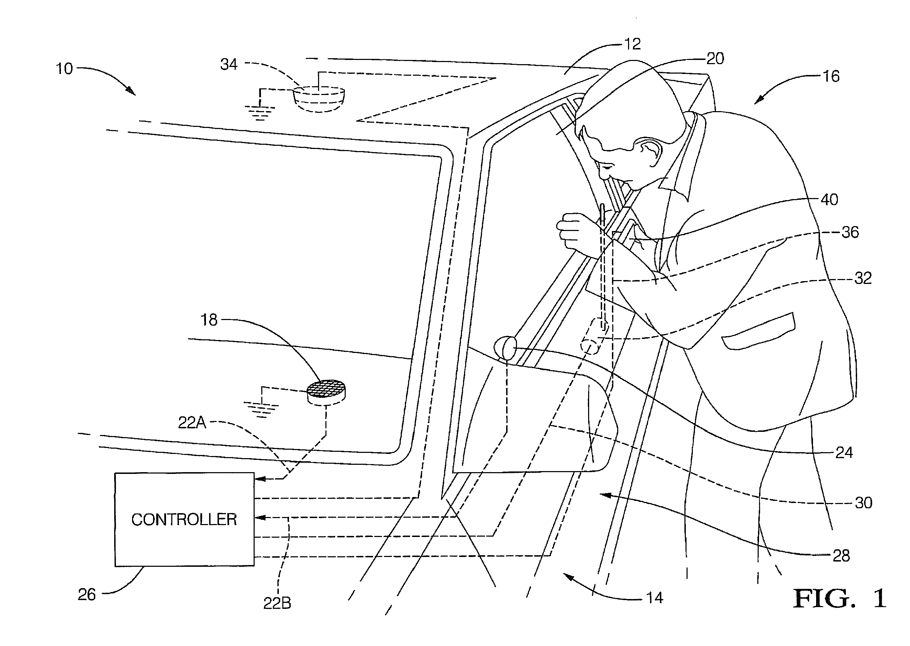

Fig. 1 illustrates a non-limiting example of a vehicle security system, hereafter the system 10, installed in a vehicle 12. In general, the system 10 includes a knock detection means 14 configured to detect knocking on the vehicle 12 by an operator 16. By way of example and not limitation, the knock detection means 14 may be a microphone 18 installed within the cabin of the vehicle 12. The microphone 18 may be the same microphone as used for a voice command recognition system or operator assistance system such as ONSTAR®. Using a microphone already present in the vehicle 12 is preferable as the knock detection means 14 does not incur additional vehicle cost. Alternatively, the knock detection means 14 may be an accelerometer 24 attached to or coupled to a window 20, or a body panel of the vehicle 12.

Preferably, the knock detection means is configured to detect knocking on a window of the vehicle 12 as knocking on a body panel may lead to cosmetic damage of the body panel. Furthermore, it has been observed that a Fast Fourier Transform (FFT) of signals from the microphone 18 have a spectrum characteristic that is relatively consistent regardless of which vehicle window receives the knocking, or force of the knocking. As such, it is relatively easy to distinguish knocking on the window 20 from knocking on other parts of the vehicle 12 and other noises generated outside of the vehicle 12.

The system 10 generally includes a controller 26 configured to receive a signal (22A or 22B) from the knock detection means 14, for example a microphone signal 22A from the microphone 18, or an acceleration signal 22B from the accelerometer 24. The controller 26 is also generally configured to unlock a door 28 of the vehicle 12 if the signal (22A or 22B) corresponds to a predetermined pattern. Various ways of determining if the signal (22A or 22B) corresponds to a predetermined pattern are described in more detail below. Unlocking the door 28 may be by way of the controller 26 outputting a lock signal 30 to a lock actuator 32 that is part of a power door lock system. Alternatively, the lock signal 30 may be transmitted onto a vehicle network, for example a controller area network (CAN), and a body computer (not shown) will operate the lock actuator 32 in response to the CAN signal.

In the description below, various embodiments are described with respect to the microphone 18 and the microphone signal 22A, hereafter the signal 22A. It should be appreciated that in each example below, the accelerometer 24 and the acceleration signal 22B could be substituted.

In one embodiment, the controller 26 may monitor the signal 22A continuously to determine if sounds detected by the microphone 18 correspond to knocking. This may be by way of a Fast Fourier Transform (FFT) of the signal 22A, or by way of filtering (analog or digital) the signal 22A to detect certain spectral content and/or signal duration, as will be recognized by those in the art. In order to indicate to the operator 16 that knocking has been detected, the controller 26 may be further configured to activate a light in or on the vehicle 12, for example by illuminating a vehicle cabin interior dome light if knocking is detected.

In another embodiment, the controller 26 may be configured to only monitor the signal 22A for an activation interval (e.g. five seconds) in response to a wake-up signal (not shown) or the like being conveyed to the controller 26. For example, the controller 26 may be configured to detect a door handle actuation 36 of a door handle 40, and then monitor the signal 22A for an activation interval of five seconds if the door handle actuation 36 is detected. Such a configuration may be advantageous as the controller 26 will likely consume less electricity when in a sleep-state as opposed to monitoring the signal 22A continuously. The controller 26 may also be further configured to activate the light 34 if the door handle actuation 36 is detected.

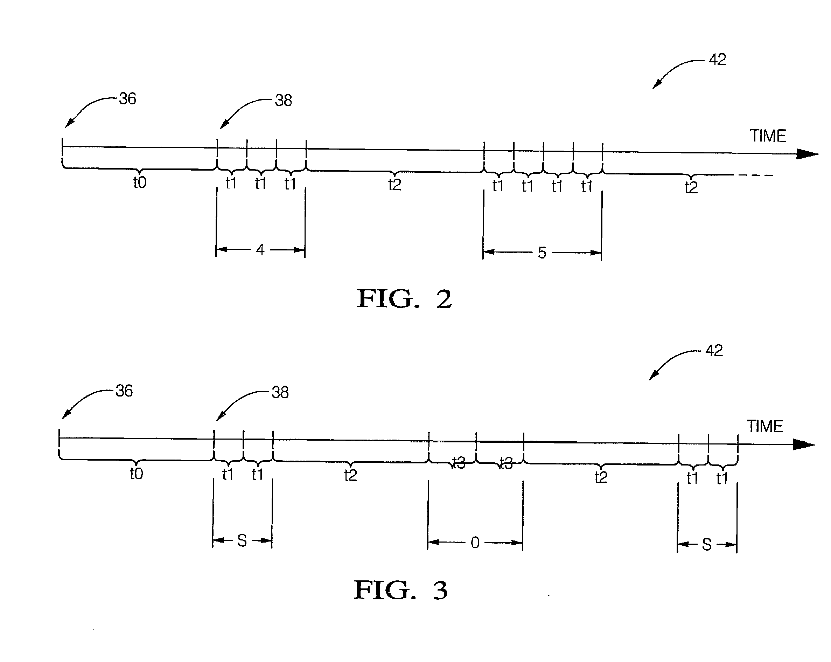

Figs. 2 and 3 illustrate by way of further example and not limitation various ways to characterize a knocking pattern 42 (i.e. a sequence of knocks) are now described. In one embodiment, the controller 26 may be 'listening' for a numerical code entered by knocking on the window 20. For example, the operator may knock four times in rapid succession (e.g. each knock temporally spaced by a knock interval t1 0.25 sec. to 1 sec., nominally 0.5 sec. intervals), then wait a pause interval t2 of, for example two seconds to five seconds (2 sec. to 5 sec.) and then knock five time in rapid succession. Then if no subsequent knocks are detected for longer than the pause interval t2, such a knocking pattern 42 may be interpreted as entering the code 4-5. Of course, it is appreciated this pattern of rapid knocks separated by subsequent pause intervals could be extended to incorporate any number of digits in the numerical code being entered. As such, for this example, the predetermined pattern comprises a first number of knocks (e.g. four) followed by a second number of knocks (e.g. 5), wherein the second number of knocks begins following a pause interval t2 (e.g. three seconds) after the first number of knocks.

If the controller 26 is configured to monitor the signal 22A continuously, entering the code may be initiated by the first knock 38. As a way of confirming that the first knock 38 was detected, or that sufficient time since the last knock of the first number has elapsed, the controller 26 may activate the light 34 to indicate the end of the pause interval t2. If the controller 26 is in sleep mode and is configured to detect the door handle actuation 36, then the controller may 'wake-up' for an activation interval t0 of, for example five seconds. If no knocking is detected within the activation interval t0, then the controller 26 may be configure to return to the sleep mode.

In another embodiment, the controller may be configured to detect knocking patterns comparable to Morse code, or a musical couplet such as 'Shave and a Haircut'. Fig. 3 illustrates an example of Morse code for the well-known letter sequences S-O-S. As in the previous example, detecting the knocking pattern 42 may begin with the first knock 38, or may begin with the door handle actuation 36. Then 'dots' are distinguished by short intervals (t1), a pause interval t2 separates one letter from another, and dashes are distinguished by long intervals (t3) as will be recognized by those familiar with Morse code. For this example, the predetermined pattern comprises a plurality of knocks, wherein each subsequent knock follows the previous knock by a distinct delay interval.

The controller 26 may also be configured to be operated into a learn mode so that the predetermined pattern is saved in the controller 26. For example, the vehicle may be equipped with a button that when pressed while the ignition key is in the accessory position, the controller 26 may interact with the operator 16 in order to record or learn a particular predetermined pattern of the operator's choosing.

Accordingly, a system 10 for unlocking a vehicle door by knocking on the window of the vehicle with a predetermined knocking pattern 42 is provided. Many vehicles are already equipped with a microphone for BLUETOOTH® phone connectivity or ONSTAR®, and they also have electronic power door locks. This system described herein uses current hardware already available in the vehicle. The system 10 may periodically listen for the sound of a knock on the window 20. If the sound is heard the controller 26 may wake-up (activate) and turn on the dome light or some other visual feedback that the vehicle is now ready (e.g. - the light 34). The driver would then knock a pre-known code on the window. After the system has detected that the code is valid it would then unlock the door. The dome light could be used to flash in response to the knocking to provide the driver feedback on what the system is registering as a valid knock.

## Claims

1. A vehicle security system (10) comprising:
a knock detection means (18, 24) configured to detect knocking on the vehicle (12); and
a controller (26) configured to receive a signal (22A, 22B) from the knock detection means and unlock a door (28) of the vehicle (12) if the signal (22A) corresponds to a predetermined pattern.

2. The system (10) according to the preceding claim, wherein the knock detection means is a microphone (18).

3. The system (10) according to any one of the preceding claims, wherein the controller (26) is further configured to activate a light (34) if knocking is detected.

4. The system (10) according to any one of the preceding claims, wherein the controller (26) is further configured to detect a door handle actuation (36), and monitor the signal (22A) for an activation interval if a door handle actuation (36) is detected.

5. The system (10) in accordance with claim 4, wherein the controller (26) is further configured to activate a light (34) if the door handle actuation (36) is detected.

6. The system (10) according to any one of the preceding claims, wherein the predetermined pattern comprises a first number of knocks followed by a second number of knocks, wherein the second number of knocks begins following a pause interval after the first number of knocks.

7. The system (10) in accordance with claim 6, wherein the end of the pause interval is indicated by the controller (26) activating a light (34).

8. The system (10) according to any one of the preceding claims, wherein the predetermined pattern comprises a plurality of knocks, wherein each subsequent knock follows the previous knock by a distinct delay interval.

9. The system (10) according to any one of the preceding claims, wherein the controller (26) is further configured to be operated into a learn mode whereby the predetermined pattern is saved in the controller (26).
